# EUROPEAN PATENT SPECIFICATION

(11) **EP 0 801 713 B1**
(45) Date of publication and mention of the grant of the patent: **19.12.2001**
(21) Application number: 94921261.7
(22) Date of filing: 07.06.1994
(51) Int. Cl.: F16D 3/16, F16D 3/30

(54) **UNIVERSAL JOINT HAVING CENTERING DEVICE**
KREUZGELENK MIT ZENTRIERVORRICHTUNG
JOINT ARTICULE POSSEDANT UN DISPOSITIF DE CENTRAGE

(43) Date of publication of application: 22.10.1997
(73) Proprietor: CORNAY, Paul Joseph, Longmont, CO 80501 (US)
(72) Inventor: CORNAY, Paul Joseph, Longmont, CO 80501 (US)
(74) Representative: Godsill, John Kenneth
(86) International application number: US9406448
(87) International publication number: WO9429604

(56) References cited:
- US-A- 730 604
- US-A- 1 913 783
- US-A- 2 346 058
- US-A- 2 737 791
- US-A- 2 780 079
- US-A- 2 986 022
- US-A- 2 991 634
- US-A- 3 064 453
- US-A- 3 835 667
- US-A- 4 508 522
- US-A- 4 579 546
- US-A- 4 650 439
- US-A- 4 955 741
- US-A- 5 094 651
- US-A- 5 277 659

## Description

The present invention relates to universal joints having centering devices.

Universal joints are used in a multitude of industries, including the aerospace, automotive, and marine industries. The aerospace industry uses universal joints, for example, to transfer power to control surfaces. Universal joints are used in steering columns in automobiles to transfer power. Universal joints are used in boat motors. In addition, universal joints can be found in everything from tractors to robots.

Information about universal joints can be found, for example, in the Society of Automotive Engineers Universal Joint and Driveshaft Design Manual (AE-7) (1979). General information about centering devices for universal joints can be found, for example, in this manual, especially at pages 103, 112-115, 123, 124, 323, and 324.

The present invention claimed herein comprises a double universal joint of the type described in my U.S. Patent No. 5,094,651 and, in particular, my later U.S. Patent 5,277,659, but with a centering device to maintain the angular velocity ratio of the input shaft and the output shaft as close to unity as possible. Also forming part of the state of the art is U.S. Patent No. 4,650,439.

The present invention concerns a universal joint including:
(a) first and second rings;
(b) first and second yokes disposed within the first and second rings, respectively;
(c) first and second shafts;
(d) first pin means pivotally interconnecting the first yoke and the first ring;
(e) second pin means pivotally interconnecting the first shaft and the first ring;
(f) third pin means pivotally interconnecting the second yoke and the second ring;
(g) fourth pin means interconnecting the second shaft and the second ring;
(h) a third shaft interconnecting the first yoke and the second yoke;
(i) a plurality of bearing means in each ring, the bearing means in the first ring receiving the first and second pin means, and the bearing means in the second ring receiving the third and fourth pin means; and is characterised in that
(j) centering means is interconnecting the first shaft and the second shaft, and is at least partially contained within the third shaft.

The centering means can comprise a pair of balls and sockets, with a ball and socket adjacent the pivot point of each of the first and second shafts, the balls being interconnected. The first yoke, the second yoke, and the third shaft can define a coupling member, and the balls of the centering means can be interconnected with a sleeve within the coupling member. In such a case, as the centering means oscillates within the coupling member, lubricant may be continuously packed via a hole in the sleeve into the sleeve, providing feed of lubricant to the balls.

Advantageously, the centering means includes a spring means urging apart two wear means. Alternatively, the centering means includes spring means urging the two balls together.

The centering means can comprise a ball and socket adjacent the pivot point of each of the first and second shafts.

Preferably, there are means for allowing the first shaft to move up to 90° relative to the second shaft.

The universal joint of the present invention is preferably a constant velocity universal joint.

Preferably, the centering means allows the joint to operate at constant velocity at all angles in a predetermined design range.

For a further understanding of the nature, objects, and advantages of the present invention, reference should be had to the following detailed description, read in conjunction with the following drawings. In the drawings Figs. 1-12 show earlier forms of universal joint according to US-A-5,094,651 and Figs. 13 and 14 are for a later form of universal joint according to US-A-5,277,659 of which the present invention is a development. Reference should be made to these documents for a full description of the drawings originating therein. In the accompanying drawings, like reference numerals denote like elements and:

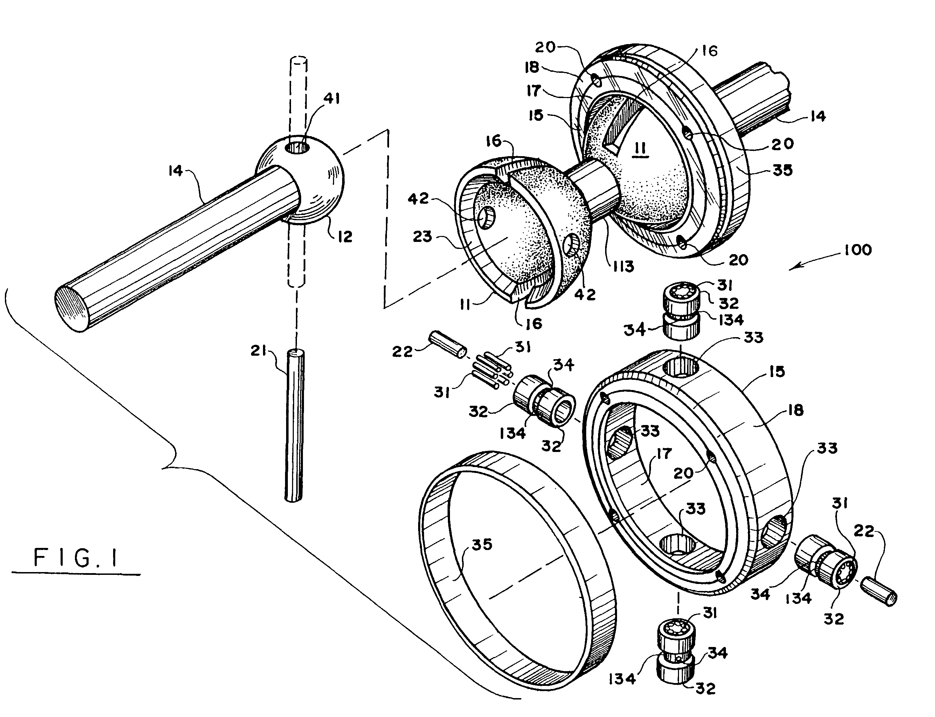

Fig. 1 is an exploded view of a universal joint in accordance with US-A-5,094,651.

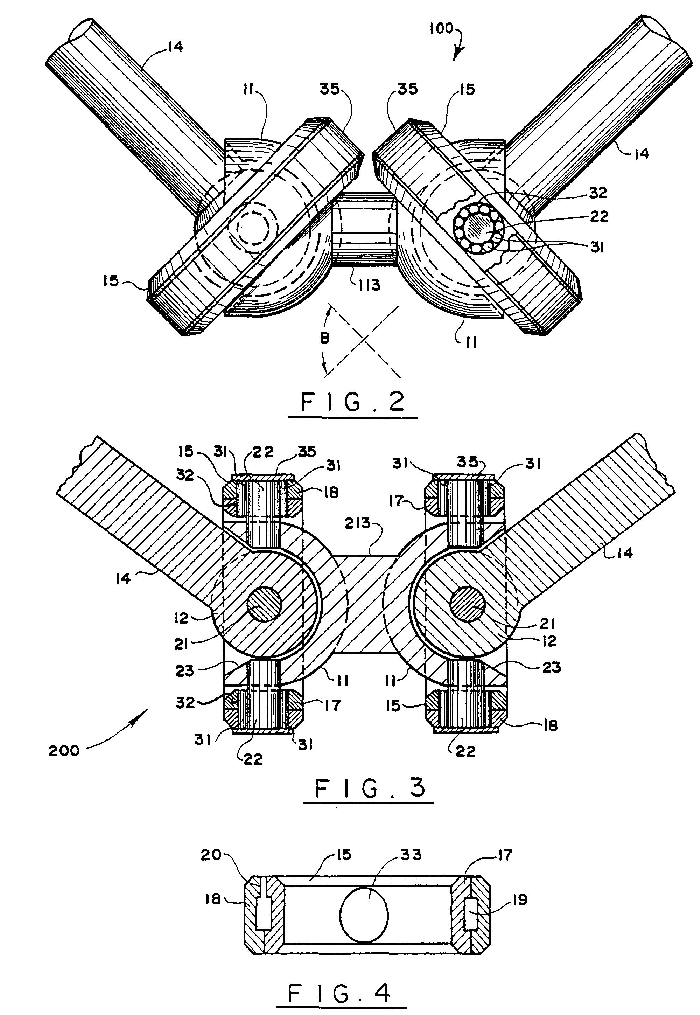

Fig. 2 is a side view of the embodiment of the invention shown in Fig. 1.
Fig. 3 is a sectional view of an alternative embodiment of a universal joint according to US-A-5,094,651.
Fig. 4 is a sectional view of the pivot ring of universal joints of Fig. 1 and Fig. 3.

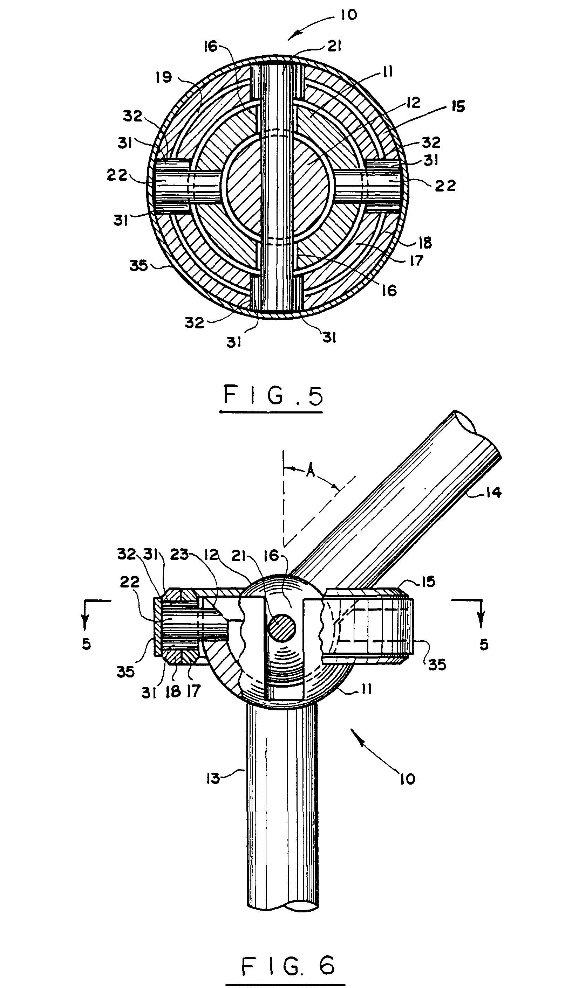

Fig. 5 is a sectional view taken along the lines 5-5 in Fig. 6.
Fig. 6 is a partially cut-away view of a third universal joint of US-A-5,094,651.

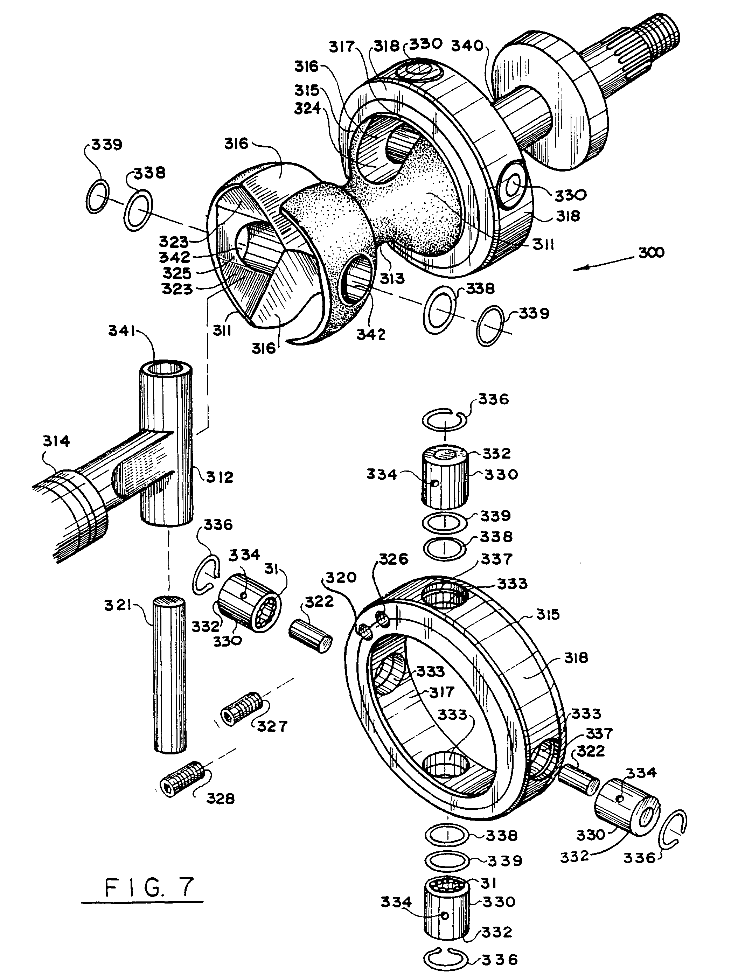

Fig. 7 is an exploded view of a fourth universal joint of US-A-5,094,651.

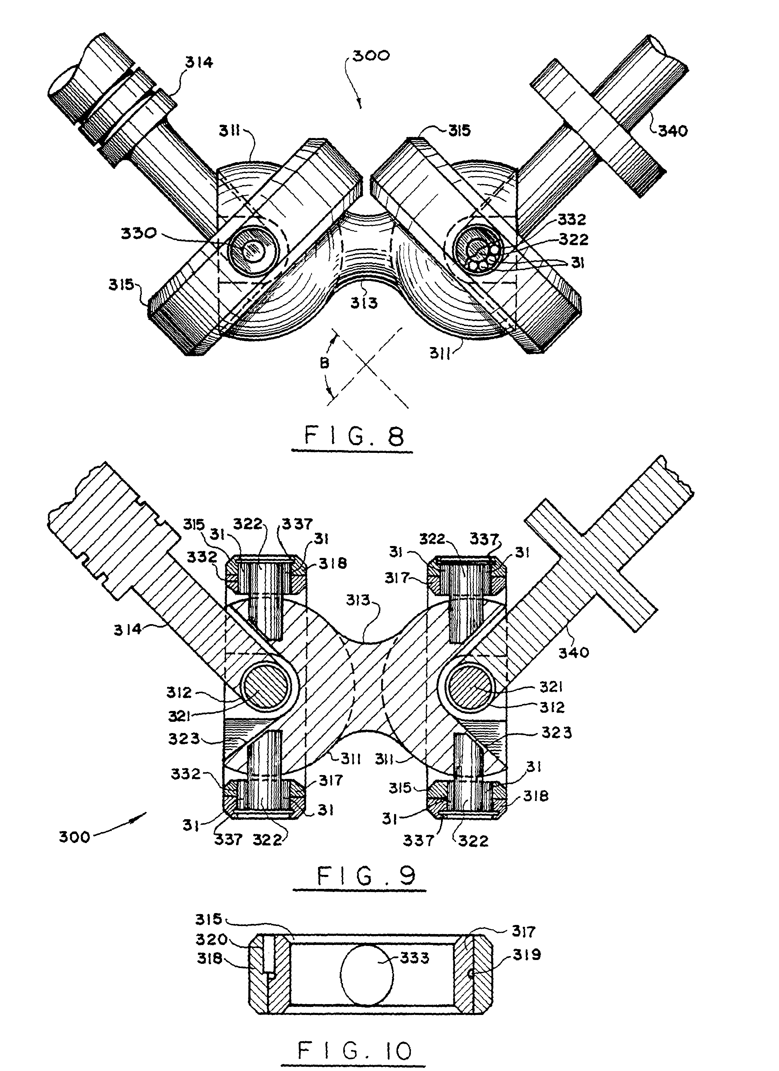

Fig. 8 is a side view of the universal joint of Fig. 7.
Fig. 9 is a sectional view of the universal joint of Fig. 7.
Fig. 10 is a sectional view of the pivot ring of the universal joint of Fig. 7.

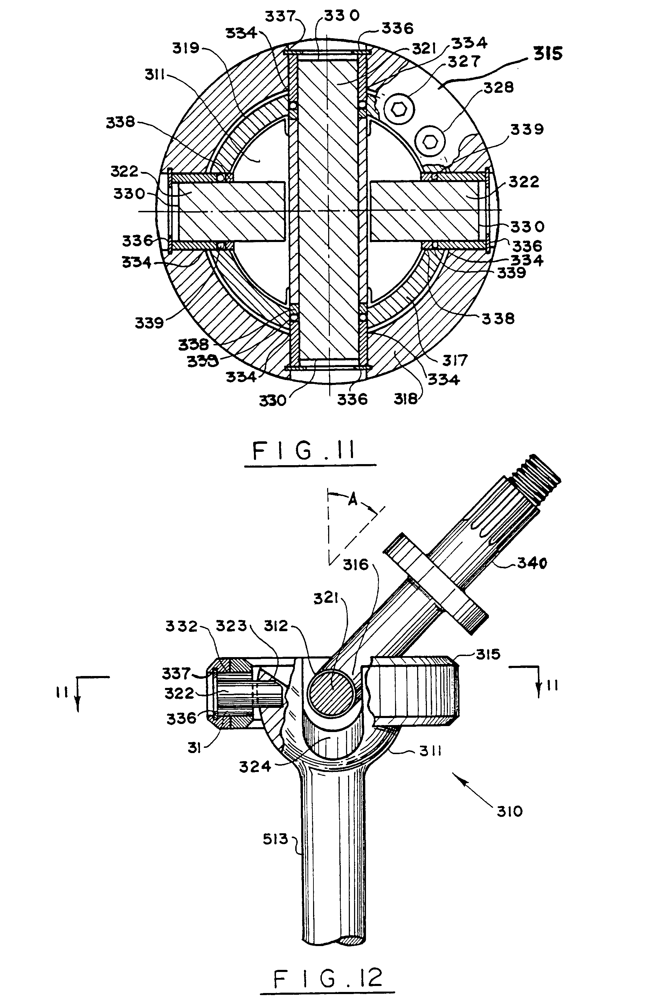

Fig. 11 is a sectional view taken along the lines 11-11 in Fig. 12.
Fig. 12 is a partially cut-away view of a fifth universal joint of US-A-5,094,651.

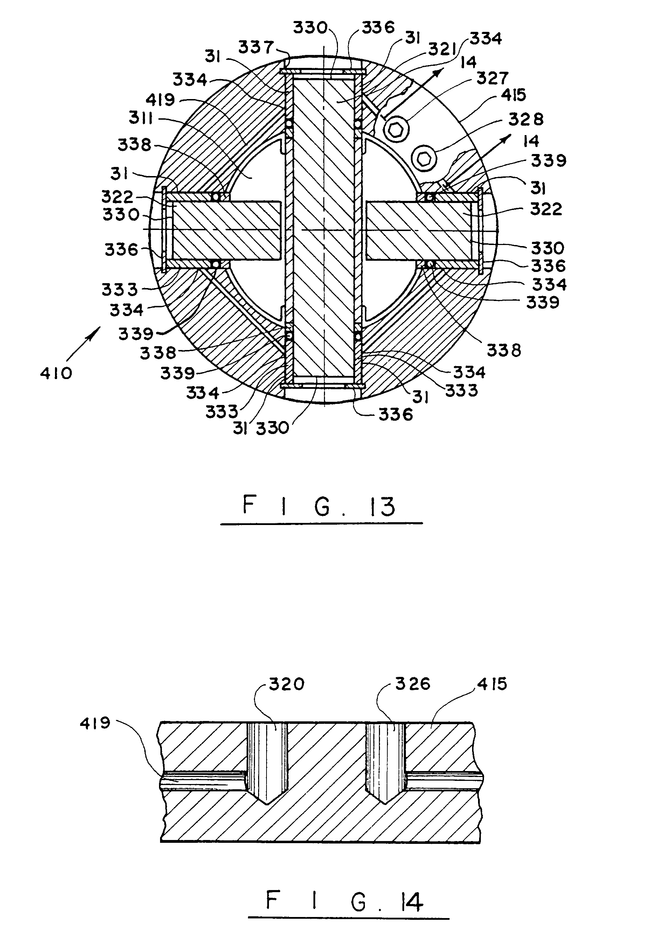

Fig. 13 is a sectional view, similar to Fig. 12, of a universal joint of US-A-5,277,659.

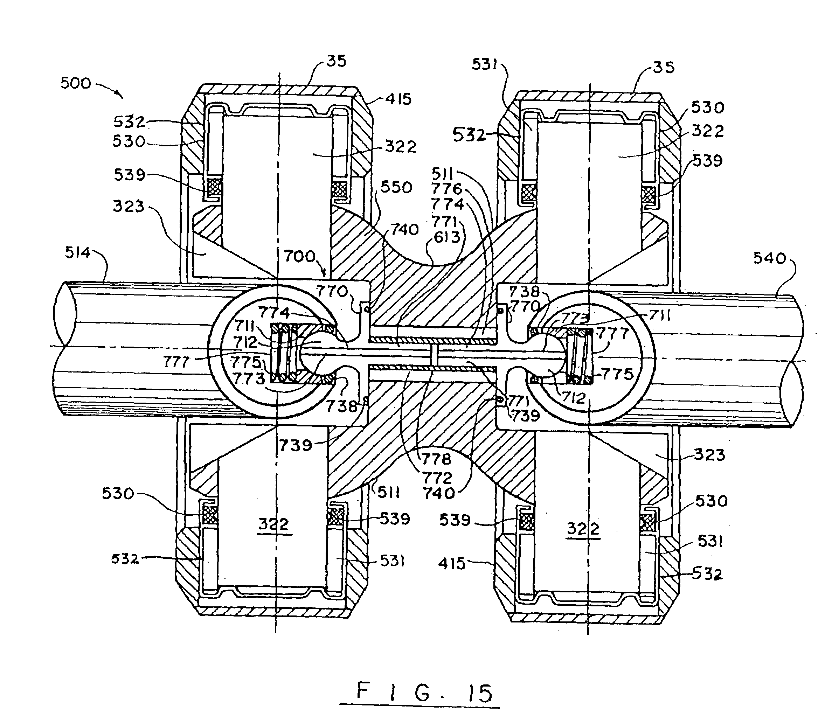

Fig. 14 is a sectional view taken along the lines 14-14 in Fig. 13.
Fig. 15 is a sectional view of a universal joint of the present invention.

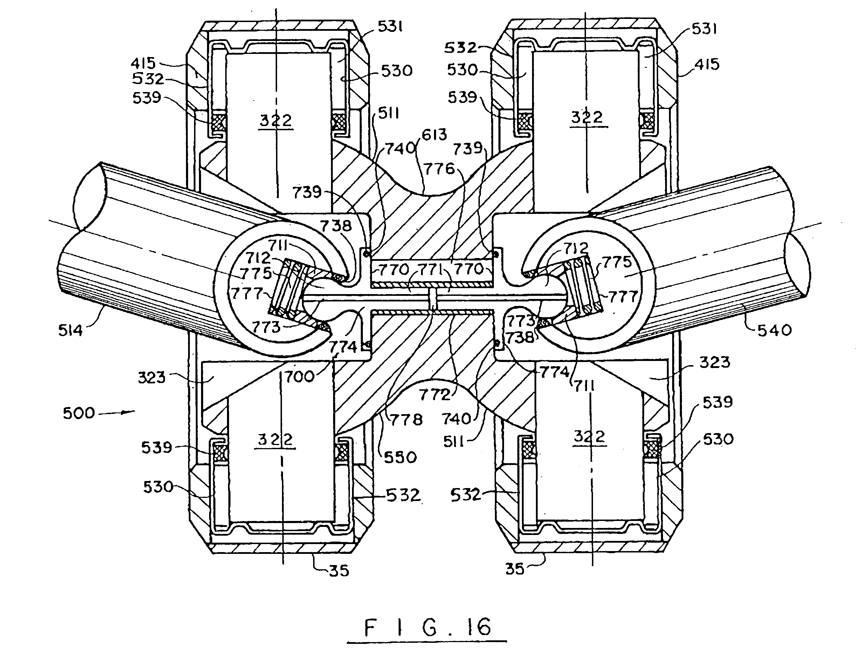

Fig. 16 is a sectional view of the universal joint of Fig. 15, showing the input and output shafts at an angle.

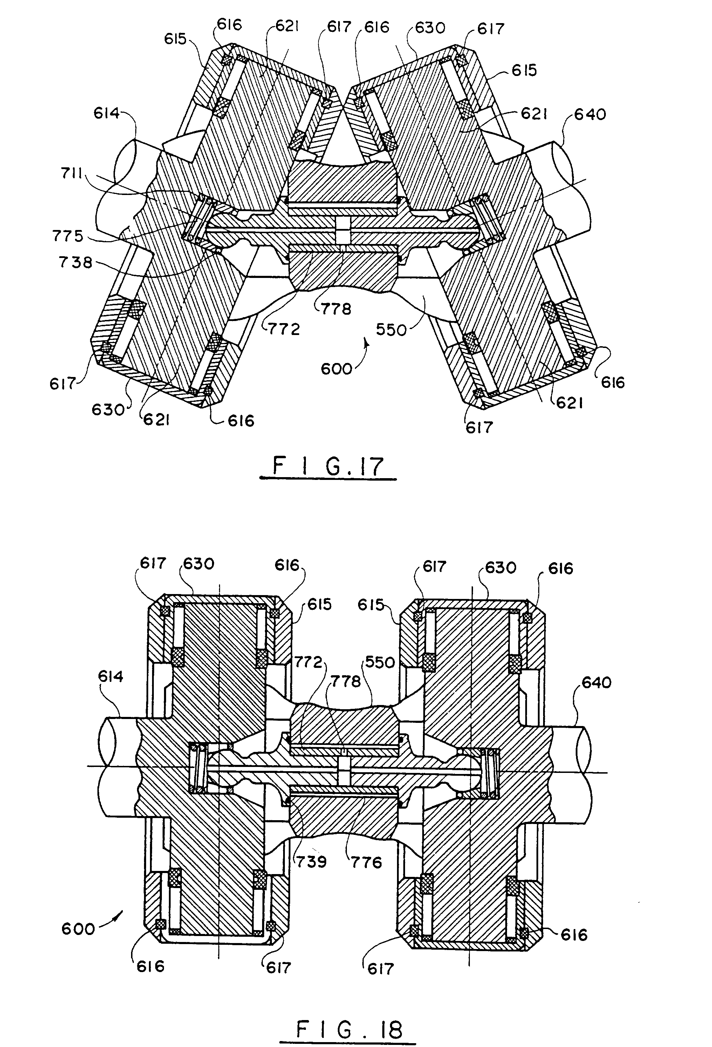

Fig. 17 is a sectional view of a second universal joint embodying the present invention, showing the input and output shafts at an angle.
Fig. 18 is a sectional view of the universal joint of Fig. 17.

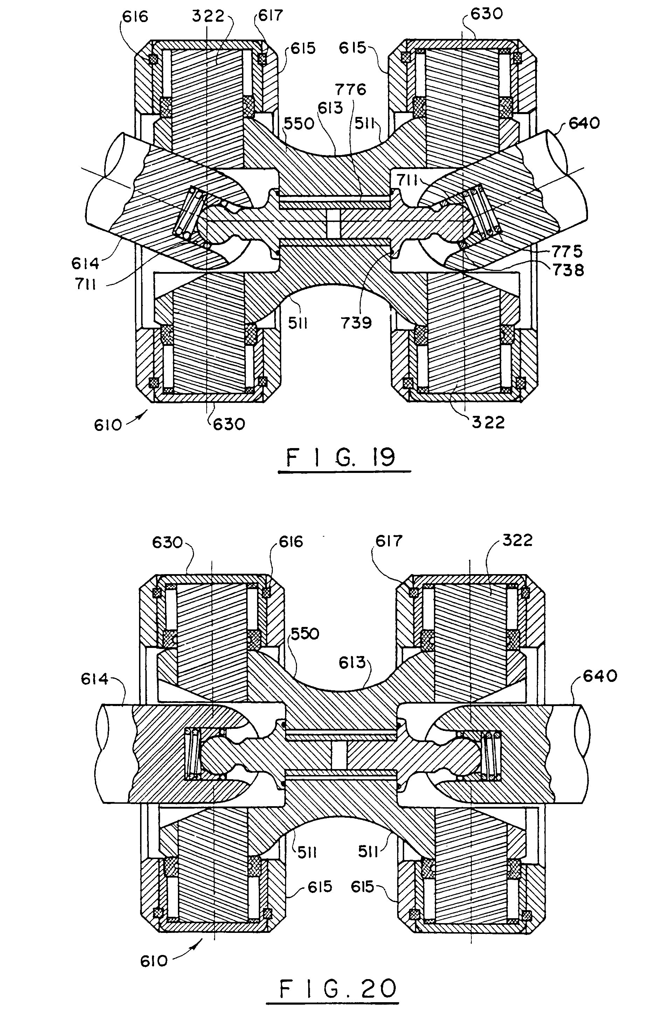

Fig. 19 is a sectional view of a third universal joint embodying the present invention, showing the input and output shafts at an angle.
Fig. 20 is a sectional view of the embodiment of Fig. 19.

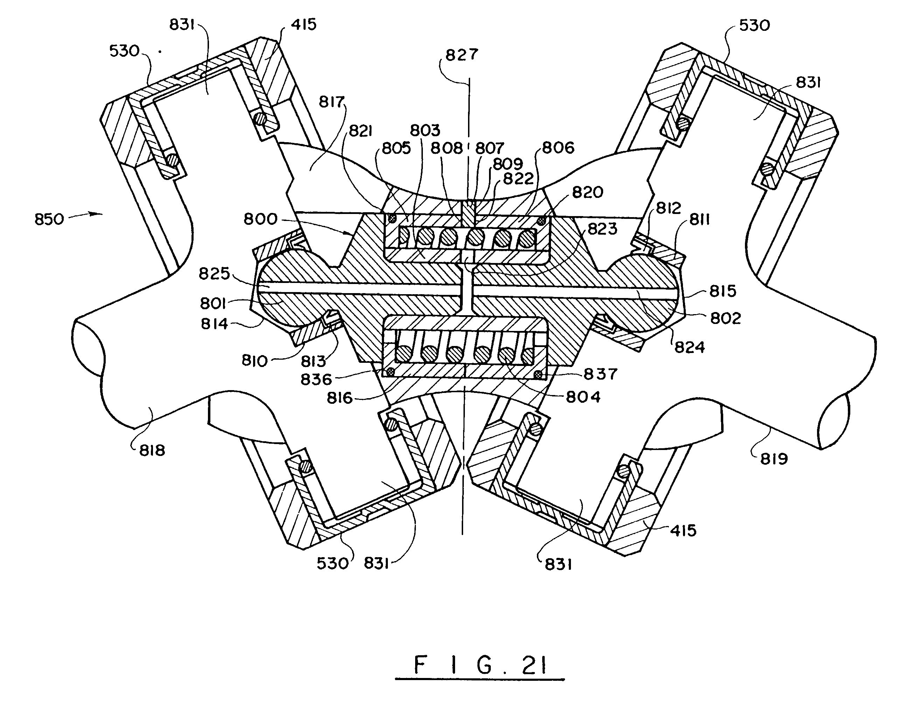

Fig. 21 is a sectional view of a fourth universal joint embodying the present invention.

### Parts List:

The following is a list of suitable parts and materials for the various elements of the present invention.
- 10: Universal joint
- 11: hemispherical split-cup yoke (AISI 4340 metal alloy)
- 12: ball (AISI 4340)
- 13: shaft (AISI 4340)
- 14: shaft (AISI 4340)
- 15: ring (AISI 4340)
- 16: notches in yoke 11
- 17: inner ring member (AISI 4340)
- 18: outer ring member (AISI 4340)
- 19: channel in ring 15
- 20: lubricant ports in ring 15
- 21: long pin (AISI 1060 with a hardness of 60-65 Rockwell C)
- 22: short pin (AISI 1060 with a hardness of 60-65 Rockwell C)
- 23: bevel in yoke 11
- 31: needle bearings
- 32: races
- 33: holes in ring 15
- 34: holes in races 32
- 35: band of material, preferably metal with an inner surface induction hardened to a depth of 0.075 cm to a hardness of Rockwell C 60
- 41: hole in ball 12
- 42: hole in yoke 11
- 100: universal joint
- 113: shaft (AISI 4340)
- 134: channel in races 32
- 200: universal joint
- 213: shaft (AISI 4340)
- 300: universal joint
- 310: universal joint
- 311: hemispherical split-cup yoke (AISI 4340)
- 312: dual trunnion (AISI 4340)
- 313: shaft (AISI 4340)
- 314: shaft (AISI 4340)
- 315: ring (AISI 4340)
- 316: notches in yoke 311
- 317: inner ring member (AISI 4340)
- 318: outer ring member (AISI 4340)
- 319: channel in ring 315
- 320: lubricant port in ring 315
- 321: long pin (AISI 1060 with a hardness of 60-65 Rockwell C)
- 322: short pin (AISI 1060 with a hardness of 60-65 Rockwell C)
- 323: beveled inner radial surface of yoke 311
- 324: beveled inner surface of yoke 311
- 325: beveled flat surface of yoke 311
- 326: Lubricant port in ring 315
- 327: flush-fitting NPT allen-head plug
- 328: flush-fitting NPT allen-head plug
- 330: closed-end needle bearing assembly (modified Torrington bearing number M-1081-20H)
- 332: races
- 333: holes in ring 315
- 334: holes in races 332
- 336: internal snap rings
- 337: snap-ring grooves in holes 333
- 338: polytetrafluoroethylene (PTFE) spacer rings
- 339: rubber O-ring (Bruna-N 90 Durometer, such as Parker No. 2-016)
- 340: shaft (AISI 4340)
- 341: hole in dual trunnion 312
- 342: hole in yoke 311
- 410: universal joint
- 415: ring (AISI 4340)
- 419: channel in ring 415
- 500: universal joint
- 511: hemispherical split-cup yoke (AISI 4340)
- 513: shaft (AISI 4340) of universal joint 310
- 514: shaft (AISI 4340) of universal joint 500
- 530: closed-end needle bearing assembly (modified INA bearing number BA1610S or BA1610.1S or F207360.1)
- 531: needle bearings
- 532: races
- 539: elastomer-type lip seal, such as seal found in INA bearing number BA1610S or BA1610.1S or F207360.1)
- 540: shaft (AISI 4340) of universal joint 500
- 550: coupling member comprising hemispherical split-cup yokes 511 and shaft 613
- 600: universal joint of the second embodiment of the invention
- 610: universal joint of the third embodiment of the invention
- 613: shaft (AISI 4340) of universal joint 500
- 614: shaft (AISI 4340) of universal joint 600
- 615: rings of universal joints 600 and 610 (same as rings 415, but additionally including grooves 616 for rings 617)
- 616: grooves in ring 615 for rings 617
- 617: Retaining ring made of injection molded plastic, as shown in Figure 65 on page 67 of the SAE Manual
- 621: pin means integral with and of shafts 614 and 640
- 630: closed-end needle bearing assembly (can be the same as assembly 530, but with a groove for ring 617)
- 640: shaft (AISI 4340) of universal joint 600
- 700: centering device of joint 500
- 711: socket of centering device 700
- 712: ball stud (plain medium carbon steel forgings, heat treated to a typical hardness range of BHN 255-285) of centering device 700
- 738: elastomer-type lip seal, such as the type described in the above-mentioned SAE design manual on page 114)
- 739: rubber O-ring (Bruna-N 90 Durometer)
- 740: groove in centering plate 770
- 770: centering plate of centering device 700
- 771: centering pin of centering device 700
- 772: centering sleeve of centering device 700
- 773: lubrication bore in ball-pin centering plate 774 (preferred, but optional)
- 774: ball-pin centering plate
- 775: spring
- 776: bore in coupling member 550
- 777: cavities in shafts 514 and 540
- 778: hole in centering sleeve 772
- 800: centering device of joint 850
- 801: ball stud
- 802: ball stud
- 803: centering sleeve of centering device 800
- 804: spring of centering device 800
- 805: cylindrical wear plate of centering device
- 806: cylindrical wear plate of centering device 800
- 807: centering pin
- 808: notch in wear plate 805
- 809: hole in coupling member 817
- 810: socket
- 811: socket
- 812: seal means
- 813: seal means
- 814: hole in shaft 818
- 815: hole in shaft 819
- 816: bore of coupling member 817
- 817: coupling member
- 818: shaft
- 819: shaft
- 820: O-ring
- 821: O-ring
- 822: notch in wear plate 806
- 823: lubricant hole in sleeve 803
- 824: lubricant bore in ball stud 802
- 825: lubricant bore in ball stud 801
- 827: constant velocity plane
- 831: pin means integral with and of shafts 818 and 819
- 836: O-ring groove in wear plate 805
- 837: O-ring groove in wear plate 806
- 850: universal joint

### Detailed Description of the Inventive Embodiments

Universal joint 500 (Figures 15 and 16) includes an input shaft 514, an output shaft 540, and a coupling member 550 comprising two hemispherical split-cup yokes 511 and a shaft 613. Ring 415 interconnects shafts 514 and 540 with yokes 511 in the same manner that ring 415 interconnects shafts 314 and 340 with yokes 311 in joint 300.

Universal joint 500 differs from universal joint 300 (see Figures 7 to 11) in that joint 500 includes a centering device 700. Centering device 700 includes a pair of ball studs 712, each connected to a centering plate 770, which in turn is connected to a centering pin 771. The ball stud 712 may be integrally formed with the centering plate 770 and centering pin 771. Centering pins 771 are received in centering sleeve 772, which in turn is received in bore 776 in coupling member 550.

Received within cavities 777 in shafts 514 and 540 are springs 775, sockets 711 of centering device 700, and elastomer-type lip seals 738. Ball studs 712 are received in sockets 711.

Rubber O-rings 739 are received in grooves 740 in each centering plate 770. O-rings 739 and sealing rings 738 serve to contain lubricant (not shown) in cavities 777 and bore 776. The lubricant can flow from one cavity 777 to the other through lubrication bores 773 in ball-pin centering plate 774, and can flow from either cavity 777 into bore 776 via bores 773 and a hole 778 in the wall of sleeve 772. The lubricant can be pre-loaded in bore 776, cavities 777, and bores 773, or it can be pumped into them via an optional grease zerk (not shown in the drawings) which communicates with bore 776.

Closed-end needle bearing assembly 530 includes races 532, needle bearings 531, and elastomer-type lip seal 539.

When joint 500 operates at an angle, centering pins 771 and centering sleeve 772 of centering device 700 must orbit within the space provided in bore 776 in coupling member 550. The closer that ball 712 is to the pivot point of shafts 514 and 540, the smaller the orbital path of centering plate 770 will be. This is significant because the amount of orbiting which occurs in the twin ball and centering plate-type double Cardan joint is harder to control. The smaller the orbital path, the less wear on mating parts and seals.

Joint 500 is the first ring-type universal joint with a centering device. Joint 500 is the first self-supported double ring joint.

Centering device 700 allows joint 500 to operate at constant velocity at all angles within the design range of joint 500 (0-90 degrees).

The center of ball stud 712 and socket 711 of centering device 700 can be placed adjacent the pivot point of the input shaft 514 and output shaft 540. The center of ball stud 712 and socket 711 of centering device 700 can be placed closer to the pivot point of the input shaft 514 and output shaft 540 than in other universal joints. The closer the ball stud 712 and socket 711 are placed to this pivot point the smaller the magnitude of oscillation of the ball stud 712 in the socket 711 will be. Conversely, the other centering devices of which the inventor is aware are located at the center of the joint making the degree or magnitude of oscillation equal to the total joint angle. Centering device 700 incorporates two ball studs 712 and sockets 711 which will experience oscillations in the socket at one half of the total joint angle.

The location of ball studs 712 and sockets 711 in relation to the pivot point of the input and output shafts 514 and 540 can control the degree of oscillation of centering plate 770 in relation to coupling member 550. This is why not much room is needed in bore 776.

Like the Double Cardan twin ball and centering plate-type centering devices, centering device 700 allows joint 500 to operate at all angles in the design range, where the instantaneous angular velocity ratio is unity. In other words, joint 500 will operate at constant velocity at all angles. The centering device of other double-Cardan joints will only allow the joints to operate at true constant velocity at one design angle and at 0 degrees.

Centering device 700 includes two ball-pin centering plates 774 which are allowed to oscillate within bore 776 in coupling member 550 as joint 500 rotates at an angle.

Joint 500 is assembled in the same manner as is joint 300. Ball-pin centering plates 774 are held together by being pressed (i.e., press fit) into sleeve 772, and sockets 711 are inserted into cavities 777 after springs 775 are received in cavities 777. A metal ring, for example, can hold sealing rings 738 in place. The metal ring can be press-fit into cavity 777.

Lubricant may be stored in bore 776 and supplied to ball studs 712 and sockets 711 via a single hole 778 in centering sleeve 772.

As centering device 700 oscillates within coupling member 550 lubricant is continuously packed via hole 778 into sleeve 772 and ball-pin centering plates 774, providing positive pressure or feed of lubricant to ball studs 712 and sockets 711.

Centering device 700 functions as a self-aligning bearing and provides internal supporting and centering means for universal joint 500.

For high-speed applications, additional bearings can be added as described in the Society of Automotive Engineers Universal Joint and Driveshaft Design Manual (AE-7) (1979), especially at pages 103, 112-115, 123, 124, 323, and 324.

Figures 17 and 18 show a second embodiment of the invention, universal joint 600. Joint 600 is substantially similar to joint 500.

Figures 19 and 20 show a third embodiment of the invention, universal joint 610. Joint 610 is substantially similar to joint 600, but does not include bores 773 and hole 778. Joint 610, however, preferably does include bores 773 and hole 778 to allow lubricant to flow through ball-pin centering plates 774.

Universal joint 850 (Figure 21) is similar to joint 500, but has a centering device 800 instead of centering device 700.

Centering device 800 differs from centering device 700 primarily by the addition of spring 804 and wear plates 805 and 806. Spring 804 removes slack which can result from wearing on bearing surfaces of wear plates 805 and 806. Spring means such as shown in Figures 15-20 could be used in holes to remove slack due to wear of ball studs 801 and 802 and sockets 810 and 811.

Centering device 800 is assembled by placing spring 804 over sleeve 803. Cylindrical wear plates 805 and 806 are placed over each end of spring 804. Ball studs 801 and 802 are pressed into sleeve 803 forming an assembly. A heavy press fit or shrink fit is preferable. The assembly is then inserted into bore 816 of coupling member 817. The center of the assembly is locked in the constant velocity plane 827 by pressing centering pin 807 into hole 809 of coupling member 817 and into notch 808 of cylindrical wear plate 805 and notch 822 of cylindrical wear plate 806.

Socket 810 is received in hole 814 in shaft 818, and socket 811 is received in hole 815 in shaft 819. Ball stud 801 is received in socket 810, and ball stud 802 is received in socket 811.

O-ring 821 is received in O-ring groove 836 in wear plate 805 and O-ring 820 is received in O-ring groove 837 in wear plate 806.

The lubricant can be pre-loaded in holes 814 and 815, bores 824 and 825, and in sleeve 803, or it can be pumped into them via an optional grease zerk (not shown in the drawings) which communicates with all passageways in centering device 800.

Lubricant can travel through lubricant bore 825 in ball stud 801, lubricant bore 824 in ball stud 802, and lubricant hole 823 in sleeve 803.

O-rings 820 and 821 and seal means 812 and 813 help to keep lubricant in centering means 800. O-rings 820 and 821 help to keep lubricant from leaking between cylindrical wear plates 805 and 806 and bore 816. Seal means 812 and 813 (elastomeric seals, for example) help to keep lubricant from leaking out of holes 814 and 815.

Pin means 831 are integral with shafts 818 and 819.

The bigger spring 804 is advantageous over the smaller springs 775 because, among other things, one needs to remove less material from the input and output shafts when using spring 804, since it is not necessary to make room for springs 775. Most importantly, however, larger spring 804 removes slack which may be caused as ball studs 801 and 802 wear. The wear may be so insignificant that the springs may not be necessary.

Centering device 800 works in the same manner as centering device 700.

Whenever "press-fit" has been used herein, "shrink-fit" could also have been used. Press fitting involves forcing together, for example, a pin into a hole of slightly smaller diameter than the pin, simply by mechanical force. Shrink fitting involves heating the part containing the hole and cooling the pin so that the diameter of the hole can be even smaller compared to the diameter of the pin than is possible with press fitting, resulting in a tighter fit of parts.

Instead of making a 90° joint by attaching two yokes of 45° joints with a shaft, a 90° joint can be made by attaching two balls or two dual trunnions with a shaft. This type of 90° joint may prove easier to manufacture.

The foregoing embodiments are presented by way of example only; the scope of the present invention is to be limited only by the following claims.

## Claims

1. A universal joint comprising:
(a) first and second rings (415,615);
(b) first and second yokes (511) disposed within the first and second rings, respectively;
(c) first (514,614,818) and second (540,819) shafts;
(d) first pin means (322) pivotally interconnecting the first yoke (511) and the first ring (415,615);
(e) second pin means (621,831) pivotally interconnecting the first shaft (514,614,818) and the first ring (415,615);
(f) third pin means (322) pivotally interconnecting the second yoke (511) and the second ring (415,615);
(g) fourth pin means (621,831) interconnecting the second shaft (540,640,819) and the second ring (415,615);
(h) a third shaft (613) interconnecting the first yoke (511) and the second yoke (511);
(i) a plurality of bearing means (530,531) in each ring (415,615), the bearing means in the first ring receiving the first and second pin means, and the bearing means in the second ring receiving the third and fourth pin means, **characterised in that** centering means (700,800) interconnecting the first shaft (514,818) and the second shaft (540, 819) for causing the second shaft to more at the same angle relative to the third shaft as does the first shaft is at least partially contained within the third shaft (613).

2. The universal joint of claim 1, wherein the centering means comprises:
a pair of balls (712,801,802) and sockets (711,810,811), with a ball and socket adjacent the pivot point of each of the first (514,818) and second (540,819) shafts, the balls being interconnected.

3. The joint of claim 2, wherein the centering means includes a spring means (804) urging apart two wear means (806,816).

4. The joint of claim 2, wherein the centering means includes spring means (715) urging the two balls (712) together.

5. The universal joint of claim 2, wherein:
the first yoke (511), the second yoke (511), and the third shaft (613) define a coupling member (550,817); and
the balls (712,801,802) of the centering means are interconnected with a sleeve (772,803) within the coupling member (550,817).

6. The universal joint of claim 5, wherein the sleeve (803) incorporates a hole (823) which receives lubricant such that, as the centering means oscillates within the coupling member, lubricant is continuously packed via the hole (823) in the sleeve (803) into the sleeve to provide a feed of lubricant to the balls (801,802).

7. The universal joint of claim 1, wherein:
the centering means comprises:
a ball (712,801,802) and socket (711,810,811) adjacent the pivot point of each of the first (514,818) and second (540,819) shafts.

8. The joint of any preceding claim, further comprising means for allowing the first shaft to move up to 90° relative to the second shaft.

9. The joint of any preceding claim, wherein the universal joint is a constant velocity universal joint.

10. The joint of any preceding claim, wherein the centering means allows the joint to operate at constant velocity at all angles in a predetermined design range.

## Patentansprüche

1. Universalgelenk, umfassend:
a) erste und zweite Ringe (415, 615);
b) erste und zweite Gabeln (511), die innerhalb des ersten bzw. des zweiten Rings angeordnet sind;
c) eine erste Welle (514, 614, 818) und eine zweite Welle (540, 819);
d) eine erste Bolzenvorrichtung (322), die die erste Gabel (511) und den ersten Ring (415, 615) drehbar verbindet;
e) eine zweite Bolzenvorrichtung (621, 831), die die erste Welle (514, 614, 818) und den ersten Ring (415, 615) drehbar verbindet;
f) eine dritte Bolzenvorrichtung (322), die die zweite Gabel (511) und den zweiten Ring (415, 615) drehbar verbindet;
g) eine vierte Bolzenvorrichtung (621, 831), die die zweite Welle (540, 640, 819) und den zweiten Ring (415, 615) verbindet;
h) eine dritte Welle (613), die die erste Gabel (511) und die zweite Gabel (511) verbindet;
i) eine Anzahl Lagervorrichtungen (530, 531) in jedem Ring (415, 615), wobei die Lagervorrichtungen im ersten Ring die erste und die zweite Bolzenvorrichtung aufnehmen und die Lagervorrichtungen im zweiten Ring die dritte und vierte Bolzenvorrichtung aufnehmen, **dadurch gekennzeichnet, dass** eine Zentriervorrichtung (700, 800), die die erste Welle (514, 818) und die zweite Welle (540, 819) verbindet, damit sich die zweite Welle mit dem gleichen Winkel wie die erste Welle relativ zur dritten Welle dreht, zumindest teilweise innerhalb der dritten Welle (613) enthalten ist.

2. Universalgelenk nach Anspruch 1, wobei die Zentriervorrichtung umfasst:
ein Paar Kugeln (712, 801, 802) und Buchsen (711, 810, 811), wobei sich eine Kugel und eine Buchse nahe am Drehpunkt sowohl der ersten Welle (514, 818) als auch der zweiten Welle (540, 819) befinden und die Kugeln verbunden sind.

3. Gelenk nach Anspruch 2, wobei die Zentriervorrichtung eine Federvorrichtung (804) enthält, die zwei Verschleißteile (806, 816) auseinander drückt.

4. Gelenk nach Anspruch 2, wobei die Zentriervorrichtung eine Federvorrichtung (715) enthält, die die beiden Kugeln (712) gegeneinander drückt.

5. Universalgelenk nach Anspruch 2, worin:
die erste Gabel (511), die zweite Gabel (511) und die dritte Welle (613) ein Verbindungsteil (550, 817) bestimmen; und
die Kugeln (712, 801, 802) der Zentriervorrichtung mit einer Hülse (772, 803) innerhalb des Verbindungsteils (550, 817) verbunden sind.

6. Universalgelenk nach Anspruch 5, wobei die Hülse (803) ein Loch (823) enthält, das Schmiermittel aufnimmt, so dass, wenn sich die Zentriervorrichtung in dem Verbindungsteil Hin und Her bewegt, über das Loch (823) in der Hülse (803) fortlaufend Schmiermittel in die Hülse gedrückt wird, damit die Köpfe (801, 802) mit Schmiermittel versorgt werden.

7. Universalgelenk nach Anspruch 1, worin:
die Zentriervorrichtung umfasst:
eine Kugel (712, 801, 802) und eine Buchse (711, 810, 811) nahe am Drehpunkt sowohl der ersten Welle (514, 818) als auch der zweiten Welle (540, 819).

8. Gelenk nach irgendeinem vorhergehenden Anspruch, zudem umfassend eine Vorrichtung, die es gestattet, dass sich die erste Welle mit einem Winkel von bis zu 90 Grad relativ zur zweiten Welle bewegt.

9. Gelenk nach irgendeinem vorhergehenden Anspruch, wobei das Universalgelenk ein Universal-Gleichlaufgelenk ist.

10. Gelenk nach irgendeinem vorhergehenden Anspruch, wobei es die Zentriervorrichtung dem Gelenk erlaubt, bei allen Winkeln in einem vorbestimmten Entwurfsbereich mit konstanter Geschwindigkeit zu laufen.

## Revendications

1. Joint articulé comprenant:
(a) une première et une deuxième bague (415, 615) ;
(b) une première et une deuxième fourchette (511) disposées respectivement à l'intérieur de la première et de la deuxième bague ;
(c) un premier (514, 614, 818) et un deuxième (540, 819) arbre ;
(d) un premier moyen formant tige (322) raccordant, en vue de leur pivotement, la première fourchette (511) et la première bague (415, 615);
(e) des deuxièmes moyens formant tiges (621, 831), raccordant, en vue de leur pivotement, le premier arbre (514, 614, 818) et la première bague (415, 615);
(f) un troisième moyen formant tige (322) raccordant, en vue de leur pivotement, la deuxième fourchette (511) et la deuxième bague (415, 615);
(g) des quatrièmes moyens formant tiges (621, 831) raccordant le deuxième arbre (540, 640, 819) et la deuxième bague (415, 615);
(h) un troisième arbre (613) raccordant la première fourchette (511) et la deuxième fourchette (511);
(i) une pluralité de moyens formant paliers (530, 531) présents dans chaque bague (415, 615), les moyens formant paliers dans la première bague recevant les premier et deuxièmes moyens formant tiges, et les moyens formant paliers présent dans la deuxième bague recevant les troisième et quatrièmes moyens formant tiges, **caractérisé en ce que** des moyens de centrage (700, 800) raccordant le premier arbre (514, 818) et le deuxième arbre (540,819), pour pousser le deuxième arbre à se déplacer suivant le même angle par rapport au troisième arbre que le premier arbre, sont au moins en partie contenus à l'intérieur du troisième arbre (613) ;

2. Joint articulé selon la revendication 1, dans lequel les moyens de centrage comprennent :
une paire de rotules (712, 801, 802), et des logements de rotules (711, 810, 811), une rotule et son logement étant adjacents au point de pivotement de chacun des premier (514, 818) et deuxième (540, 819) arbres, les rotules étant raccordées entre elles.

3. Joint selon la revendication 2, dans lequel les moyens de centrage comprennent un moyen formant ressort (804) qui pousse deux moyens d'usure (806, 816) à s'écarter.

4. Joint selon la revendication 2, dans lequel les moyens de centrage comprennent un moyen formant ressort (715) qui pousse les deux rotules (712) ensemble.

5. Joint articulé selon la revendication 2, dans lequel :
la première fourchette (511), la deuxième fourchette (511) et le troisième arbre (613) définissent un élément d'accouplement (550, 817) ; et
les rotules (712, 801, 802) des moyens de centrage sont raccordées à un manchon (772, 803) à l'intérieur de l'élément d'accouplement (550, 817).

6. Joint articulé de la revendication 5, dans lequel le manchon (803) est muni d'un trou (823) qui reçoit un lubrifiant, de telle sorte qu'à mesure que les moyens de centrage oscillent à l'intérieur de l'élément d'accouplement, le lubrifiant est tassé en continu via le trou (823) ménagé dans le manchon (803) à l'intérieur du manchon pour assurer une alimentation en lubrifiant des rotules (801, 802).

7. Joint articulé selon la revendication 1, dans lequel :
les moyens de centrage comprennent :
une rotule (712, 801, 802) et un logement de rotule (711, 810, 811) adjacents au point de pivotement de chacun des premier (514, 818) et deuxième (540, 819) arbres.

8. Joint selon l'une quelconque des revendications précédentes comprenant en outre des moyens permettant au premier arbre de se déplacer jusqu'à 90° par rapport au deuxième arbre.

9. Joint selon l'une quelconque des revendications précédentes, dans lequel le joint articulé est un joint articulé à vitesse constante.

10. Joint selon l'une quelconque des revendications précédentes, dans lequel les moyens de centrage permettent au joint de fonctionner à vitesse constante suivant tous les angles compris dans une plage de calcul prédéterminée.
